# EUROPEAN PATENT SPECIFICATION

(11) **EP 1 142 390 B1**
(45) Date of publication and mention of the grant of the patent: **02.07.2008**
(21) Application number: 00972926.0
(22) Date of filing: 26.10.2000
(51) Int. Cl.: H04Q 7/32

(54) **A METHOD OF DELETING SUBSCRIBER DATA OF AN INACTIVE MOBILE STATION FROM A SYSTEM DATABASE**
VERFAHREN ZUM LÖSCHEN VON TEILNEHMERDATEN EINER INAKTIVEN MOBILSTATION VON EINER SYSTEMDATENBANK
PROCEDE DE SUPPRESSION DE DONNEES D'ABONNE D'UNE STATION MOBILE INACTIVE DANS UNE BASE DE DONNEES DU SYSTEME

(30) Priority: 28.10.1999 FI 992325
(43) Date of publication of application: 10.10.2001
(73) Proprietor: Nokia Corporation, 02150 Espoo (FI)
(72) Inventor: PENTIKÄINEN, Jukka, FIN-33730 Tampere (FI)
(74) Representative: Äkräs, Tapio Juhani
(86) International application number: PCT/FI2000/000927
(87) International publication number: WO 2001/031952

(56) References cited:
- EP-A2- 0 838 963
- EP-A2- 0 969 685
- WO-A1-96/29838

## Description

### BACKGROUND OF THE INVENTION

The invention relates to detecting inactive subscribers, and particularly to detecting visiting subscribers and deleting their subscriber data from a visitor location register.

Mobile systems have been developed to allow people to move away from fixed telephone terminals without complicating their accessibility. Cellular type of mobile systems are thus characterized in that subscribers can move freely with their mobile stations and connect from one cell to another within the area of the system. To manage subscriber mobility and to obtain necessary subscriber data sufficiently rapidly for the use of the exchange serving a subscriber's mobile station, various databases, called subscriber data registers, are maintained in mobile systems. In a home location register, subscriber data on all subscribers in the network is stored permanently or semi-permanently. The home location register also usually contains routing information and information indicating whether or not the subscriber is active. The mobile station of an active subscriber is registered in the network and is able to initiate and receive calls. A visitor location register is another type of database containing temporary subscriber data. A visitor location register is usually associated with one mobile telephone exchange, but it may also serve several exchanges. When a subscriber is active, the majority of the subscriber data concerning the subscriber and contained in the home location register is loaded (copied) to the visitor location register of the mobile telephone exchange within the area of which the mobile station used by the subscriber is located. Correspondingly, the address of the visitor location register is stored in the home location register, in the subscriber's routing information. When a subscriber (and the mobile station) moves and at the same time proceeds from the area of visitor location register one to the area of visitor location register two, the address of visitor location register two is stored in the home location register as the address of the subscriber, and the subscriber data is deleted from visitor location register one. Correspondingly, when the subscriber's mobile station unregisters from the network, the subscriber data is deleted from the visitor location register and the subscriber is marked in the home location register as unreachable.

The problem in the above arrangement is that a subscriber's mobile station is able to leave the coverage area of a mobile system without unregistering. This usually happens when the connection to the system is suddenly lost, for example when the mobile station enters a shadow area. In this case the subscriber becomes an inactive subscriber (mobile station), which in the present application refers to a subscriber (mobile station) that is not accessible to the system, but whose data remain in the database of a visitor location register because of a previous registration, for example crossover, i.e. location update, or registration to the network. The subscriber data remained in a home or visitor location register unnecessarily uses up scarce radio path resources, and delays are caused in call forwarding as unnecessary attempts are made to reach the subscriber for calls. Furthermore, superfluous subscriber data consume the database capacity of a visitor location register.

A solution to the problem is for the system to maintain information on the last contact between the system and a subscriber (mobile station) over the radio path, and to delete the subscriber's data from the visitor location register when no contact with the subscriber (mobile station) is detected during a given time, for example two days. The problem in this solution is that, in addition to data on inactive subscribers, data on valid subscribers is also deleted. A valid subscriber is a subscriber who is able to and wants to be registered in the system, but has for example not moved or made or received calls during said given time. If the subscriber data on a valid subscriber is deleted, the calls to the subscriber fail. Such a deleted valid subscriber does not become valid until he/she moves to a degree that triggers off location update or he/she makes a call.

In another solution, the system also maintains information on the last contact between the system and a subscriber (mobile station) over the radio path. This solution uses re-registrations to prevent valid subscribers from being deleted. Depending on the system, either the subscriber's mobile station is programmed to re-register in the system at given intervals or the system asks the subscriber's mobile station to re-register at given intervals. This ensures that the activity data on accessible subscribers is updated sufficiently often. In this solution, when no contact with the subscriber (mobile station) is detected during a given time, for example two days, the system asks the subscriber to re-register. If the subscriber does not re-register within a given time, the system deletes the subscriber's data from the subscriber register. The problem in this solution is that it consumes radio path capacity, in particular, decreases the system's call switching and registration capacity.

Furthermore, the problem in both solutions is that they require that the database of the visitor register is gone through frequently to detect any inactive subscribers. This, too, uses up system resources, decreasing call switching capacity, for example.

EP 0 969 685, which was published after priority date claimed by the present application and thus falling within the terms of Article 54(3) EPC, discloses a solution utilizing periodic location registrations and time lapsed since the last periodic location registration to determine, during a search made to registered subscriber data, whether or not to put subscriber data in the inactive holding state, and if the subscriber data already is in the inactive holding state, whether or not to delete it.

WO 96/29838 discloses that a solution on question "should subscriber data be updated in a visitor location register or in a home location register" is solved on the basis of age labels informing the last update of the corresponding data.

EP 0 838 963 relates to a DECT system and teaches how to ensure that also terminals that were not active at a time when amendments were propagated to terminals, obtain the amendments.

WO 94/10810 discloses a solution in which, prior to paging a mobile terminal due to a terminating call thereto, it is determined how long has passed from the last radio contact to the mobile terminal, and if the determined time exceeds a given length of time, instead of paging the mobile terminal, it is marked as being switched-off and the call set up attempt is stopped.

WO 99/43175 teaches that after a mobile station has left a coverage area of a visitor location register, the visitor location register does not delete corresponding subscriber data right away but maintains it for a storage time determined by an algorithm and information on entries of the mobile station, and the subscriber data is deleted from the visitor location register after the expiration of the storage time unless the mobile station has re-entered the coverage area.

### BRIEF DESCRIPTION OF THE INVENTION

It is thus an object of the invention to provide a method and an apparatus for implementing the method so as to solve the above problems. The objects of the invention are achieved by a method of deleting the subscriber data of an inactive mobile station from a mobile system database containing temporary subscriber data on the subscriber using the mobile station. The method comprises the following steps: maintaining in the system time data indicating the last contact with the mobile station over the radio path; paging the mobile station triggered by a factor unrelated to checking the activity of a mobile station of the mobile system; the method being characterized by, in case the mobile station does not answer the paging: calculating a first inactivity time, which is the time between the time data and the paging time; checking if the first inactivity time is equal to or longer than a predetermined time limit; and if so, deleting the subscriber data from the database.

The invention further relates to a cellular type of telecommunication network comprising at least one mobile station, at least one database for temporarily maintaining subscriber data on mobile stations. The telecommunication network is arranged to maintain time data indicating the last contact with the mobile station, and to page the mobile station triggered by a factor unrelated to checking the activity of a mobile station of the telecommunication network. The telecommunication network is characterized by being arranged to calculate a first inactivity time, which is the time between the time data and the paging time, in response to said failure to page the mobile station; and to delete the subscriber data from the database in response to the calculated first inactivity time being equal to or longer than a predetermined time limit.

The invention still further relates to a network node in a telecommunication system, the node being arranged to communicate with a database temporarily containing subscriber data of mobile stations of the telecommunication system, the subscriber data including time data indicating the last contact with a mobile station. The network node is arranged to page a mobile station triggered by a factor unrelated to checking the activity of a mobile station of the telecommunication system. The network node is characterized by being arranged to calculate a first inactivity time, which is the time between the time data and the paging time, in response to said failure to page the mobile station; and, in response to the calculated first inactivity time being equal to or longer than a predetermined time limit, to send to the database a command to delete the mobile station's subscriber data.

The invention is based on detecting inactive subscribers and verifying the inactivity in a way causing minimal load to the system by utilizing failed communications with the subscriber that are not intended to check the subscriber's activity over the radio path. It is an advantage of the invention that it allows the probability of deleting valid subscriber data to be minimized by attempting radio communication, without, however, consuming system capacity. Furthermore, system databases do not have to be gone through separately to detect potential inactive subscribers; instead, the subscriber data checked has already been read from a system database for example to attend to call triggering by an attempt at radio path communication. Another advantage of the invention is rapid detection of inactive subscribers who receive many calls and thus highly load the network. The invention allows the time between re-registrations to be considerably lengthened in systems where a mobile station re-registers at given intervals, resulting in less signalling at the air interface.

In the present application, the concept 'a factor unrelated to checking the activity of a mobile station' refers to other message transfer between a mobile station and the system than that transmitted in order to verify the activity of a mobile station (subscriber). In other words, it includes, not only the message transfer detected by the subscriber, but also other message transfer, for example programming group data over the radio path from the system to a terminal. The message transfer detected by the subscriber means that someone wants either to contact the subscriber or to send information to the subscriber in a connectionless manner. In other words, a call or a message sent among signalling, e.g. a short message, is coming to the subscriber. In the present application, the term 'call' refers, not only to a conventional call, but also to other, potentially virtual, connection states in which user data is relayed, such as a data session, transmission of packet data or a mere speech item if one call is processed as separate speech items in the telecommunication system. Examples include a packet radio session (such as a GPRS session), a VolP session (Voice IP), a multimedia session according to H.323, and speech items of the TETRA system or a corresponding system.

In a preferred embodiment of the invention, the subscriber data in a database is gone through one set of subscriber data at a time when a given condition is fulfilled and the subscriber's mobile station is requested to re-register if a predetermined time has lapsed from the previous contact. An additional advantage of this embodiment is that the method deletes the subscribers who never receive calls or messages. A further advantage of an embodiment where the condition is related to the filling of the visitor location register is that the subscriber data is gone through only when actually needed.

The preferred embodiments of the method, telecommunication network and network node of the invention are disclosed in the attached dependent claims.

### BRIEF DESCRIPTION OF THE FIGURES

In the following the invention will be described in detail by means of preferred embodiments with reference to the attached drawings, in which
Figure 1 is a simplified block diagram of a telecommunication network according to a first preferred embodiment of the invention,
Figures 2 and 3 are flow diagrams of the operation of the first preferred embodiment of the invention, and
Figure 4 illustrates signalling in the first preferred embodiment of the invention.

### DETAILED DESCRIPTION OF THE INVENTION

In the following, the invention will be described by way of example in a system according to the TETRA standard (TErrestrial Trunked Radio) defined by the ETSI (European Telecommunications Standards Institute), without, however, limiting the invention to any such given system. The present invention is applicable to any cellular type of mobile system, in which subscriber data is temporarily stored in a visitor location register. Such systems include for example the pan-European GSM system and its derivatives, and particularly its next generation, what is known as GSM 2+, and the third generation mobile systems being developed, the UMTS (Universal Mobile Telephone System) and the IMT-2000 (International Mobile Telecommunications 2000).

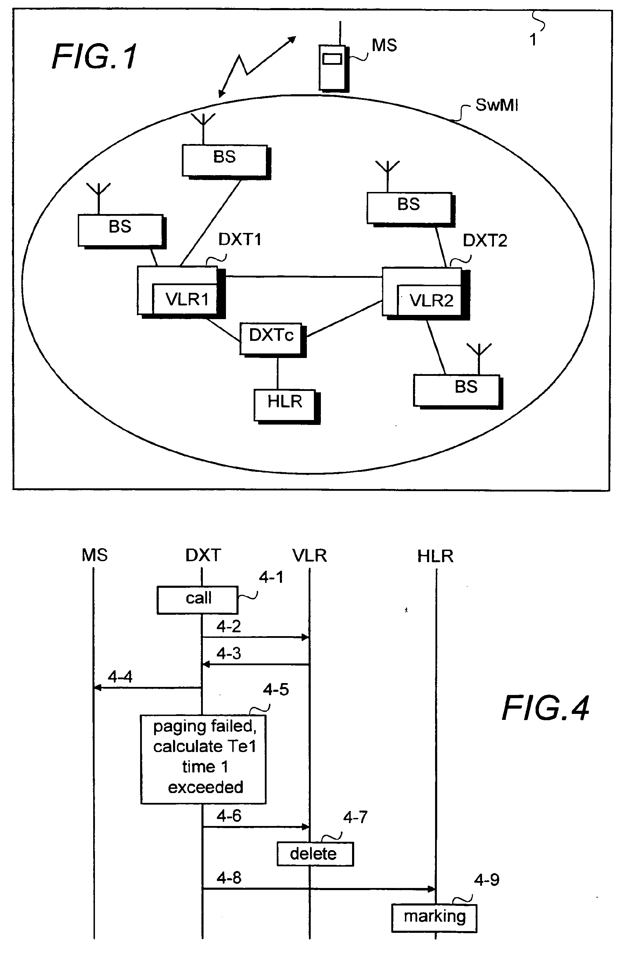

Figure 1 shows an example of the structure of a telecommunication system 1 according to the TETRA standard. Since the internal structure of the network infrastructure SwMI (Switching and Management Infrastructure) is not defined in the TETRA standard, only one exemplary solution is presented herein, and even that on a very general level. Below, network infrastructure will also be called transmission network.

Herein, a mobile station (MS) refers to the whole composed of user identification data, for example a detachably connectable identifier unit, and an actual terminal. Consequently, herein, a mobile station is directly comparable to a subscriber.

A mobile station MS communicates with a base station BS via a radio interface. Each base station BS is connected by a circuit to one of the TETRA exchanges DXT1, DXT2 (Digital Exchange for TETRA) of the fixed transmission network SwMI. The TETRA exchanges DXT1, DXT2 are connected with a fixed connection to other exchanges DXT1, DXT2 and a TETRA nodal exchange DXTc (Digital Central Exchange for TETRA), which is an exchange to which other exchanges DXT1, DXT2 and/or other nodal exchanges DXTc are connected to achieve alternative routes. The TETRA transmission network comprises open interfaces and peripherals not shown in the figure. These include for example the interface between two TETRA networks, the interface between devices connected to the network by a fixed connection and an exchange, outer interfaces to other networks, such as to the public telephone network PSTN, and network management systems and interfaces.

The system 1 also comprises as subscriber registers at least a home location register HLR and a visitor location register VLR1, VLR2. As was stated previously, the subscriber data is stored permanently or semi-permanently in the home location register HLR of the system, and temporarily in that visitor location register VLR1 in whose area the mobile station MS is located at each particular time. In other words, the visitor location register is a database that serves the exchange serving the mobile station and temporarily contains subscriber data. Each register may be a separate network node, a register distributed to the exchanges DXT1, DXT2 or to the nodal exchanges DXTc or a register integrated into one of them in a centralized manner. The way the registers are implemented is not relevant to the invention. What is relevant is that subscriber data, required for e.g. routing, is found in the network. In the example of Figure 1, the visitor location registers VLR1, VLR2 are integrated into exchanges DXT1, DXT2, and the home location register is a separate network node connected to the nodal exchange DXTc.

The SwMI network nodes of the TETRA transmission network shown in Figure 1 are usually interconnected via a signalling network SS7. However, the invention is not limited to this kind of a network and signalling; other networks and signalling, such as the ATM or IP, can also be used.

The telecommunications system and network implementing the functionality of the present invention comprise, in addition to means required for implementing prior art services, also means for calculating the inactivity time of a mobile station and for deleting subscriber data and/or marking a subscriber as unreachable if the inactivity time is equal to or longer than a predetermined time limit. In addition, the system may comprise means for sending a re-registration request to a mobile station when a predetermined condition is fulfilled. Present network nodes comprise processors and memory, which can be utilized in the functions according to the invention. All changes needed to implement the invention can be carried out as added or updated software routines and/or with application-specific integrated circuits (ASIC).

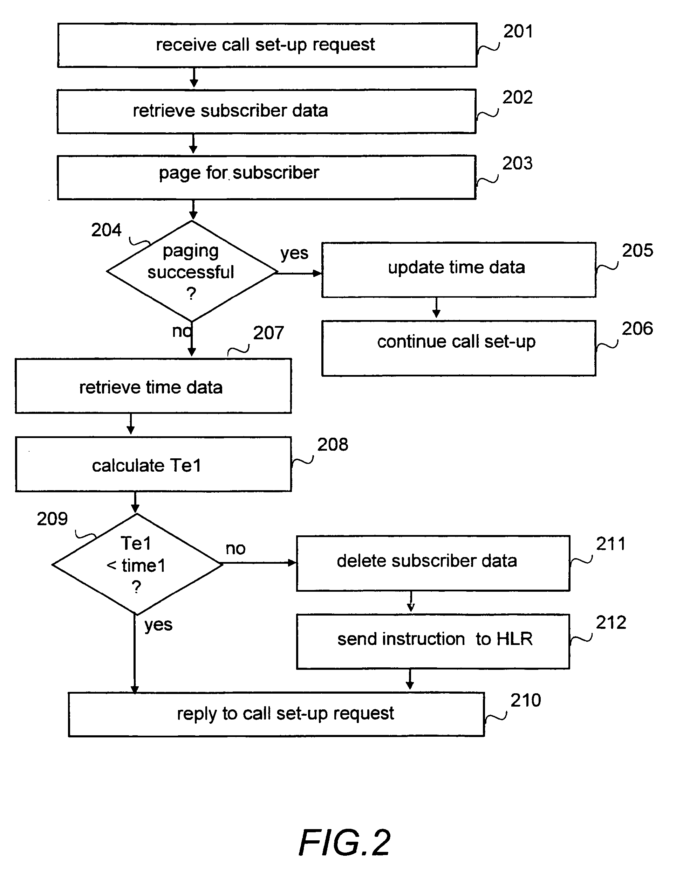

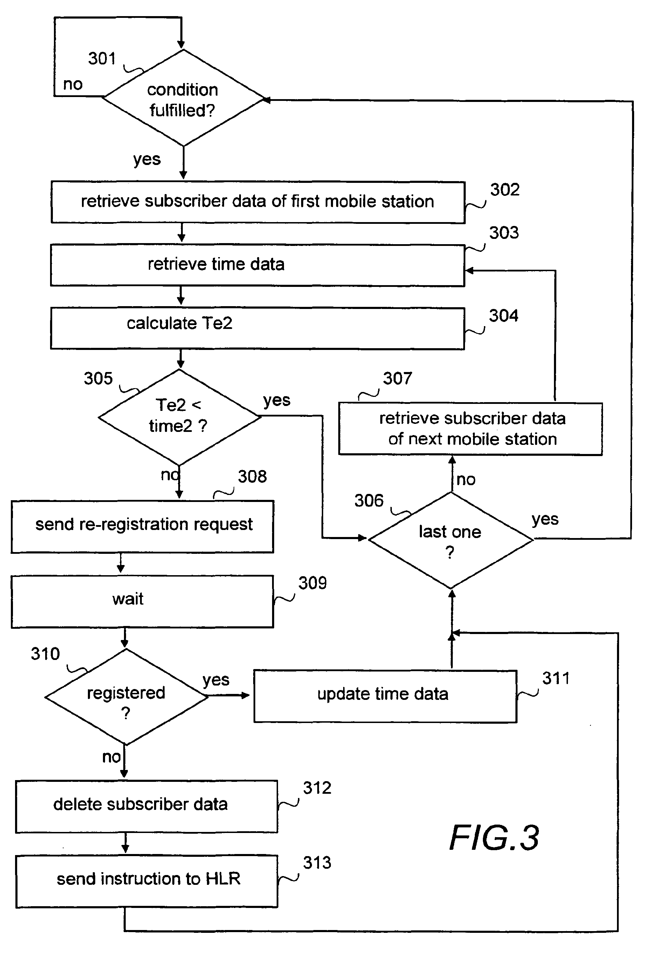

Figures 2 and 3 are flow diagrams of the deletion of inactive subscribers' subscriber data according to a first preferred embodiment of the invention using a call as exemplary message transfer. In the first preferred embodiment of the invention, time data, i.e. information about the last contact with the subscriber, is maintained in the subscriber data of a visitor location register. In the first preferred embodiment of the invention, the subscriber data of inactive mobile stations is deleted in two steps, i.e. when paging a mobile station fails (Figure 2) or when the visitor location is being gone through one set of subscriber data at a time (Figure 3). In a preferred embodiment of the invention, only the functions shown in Figure 2 are executed. In another preferred embodiment of the invention, the functions shown in Figure 2 are executed, and, in addition thereto, the mobile station is arranged to re-register in the network at given intervals, the interval preferably being slightly shorter than the inactivity time that causes deletion. The inactivity time will be explained later.

Referring to Figure 2, in step 201, a call set-up request is received to a mobile station. As a result, in step 202, the subscriber data of the mobile station is retrieved from a visitor location register. In step 203, the mobile station is paged in accordance with prior art. If the paging is successful (step 204), i.e. the mobile station answered the paging, the time data is updated in step 205, and call set-up is continued in step 206.

If the paging failed (step 204), i.e. the mobile station did not answer the paging, in step 207, the time data is retrieved from the subscriber data, and in step 208, the inactivity time Te1 is calculated. The inactivity time is calculated on the basis of the time data and the paging time. In other words, the inactivity time indicates the length of the time between the previous contact and the performed, failed paging. Then, in step 209, a check is made to see if the inactivity time Te1 is less than a predetermined time limit time1, e.g. 6 hours. If the inactivity time is less than the time limit, the process continues in accordance with prior art, i.e. because the paging failed, in step 210, the call set-up request is replied by indicating that the mobile station cannot be reached.

If the inactivity time is equal to or longer than the time limit (step 209), in step 211, the subscriber data of the mobile station is deleted from the visitor location register; in step 212, an instruction is sent to the home location register to mark the subscriber as unreachable, whereupon in step 210, the call set-up request is replied by indicating that the mobile station cannot be reached because the paging failed.

Figure 3 shows the process according to the first preferred embodiment of the invention, executed as background processing in the system. Step 301 in Figure 3 monitors if the condition is fulfilled. The condition may be associated for example with the fullness of the visitor location register, i.e. does the subscriber data of inactive mobile stations take up space from other mobile station subscribers. The condition may also be associated with time, i.e. to ensure that the subscriber data in the visitor location register is gone through always at given intervals. The interval may be long since no attempts have been made to contact the inactive mobile stations found in this way, and the subscriber data does not harm the system, except if the visitor location register is filled up. Any other suitable condition or a combination of several conditions may also be used.

When the condition is fulfilled (step 301), in step 302, the subscriber data of a first mobile station is retrieved, and the time data is retrieved from that data in step 303. In step 304, the inactivity time Te2 is calculated on the basis of the time data and the data retrieval time. In other words, the inactivity time indicates how much time has lapsed from the previous contact. Then, in step 305, a check is made to see if the inactivity time Te2 is less than a predetermined time limit time2. The time limit time2 may be the same as the time limit time1 used in the comparison of Figure 2, but it may also be different. If the inactivity time Te2 is less than the time limit, step 306 checks if the subscriber data of the mobile station is the last subscriber data in the visitor location register. In other words, in step 306, a check is made to see if all data has been gone through. If all subscriber data has been gone through, the process returns to step 301 to monitor the fulfilment of the condition. If there is still subscriber data to be gone through (step 306), in step 307, the subscriber data of the following mobile station is retrieved and the process moves to step 303 to retrieve the time data from the subscriber data.

If the inactivity time is equal to or longer than the time limit (step 305), in step 308, a re-registration request is sent to the mobile station, and in step 309, the process waits a given time for the mobile station to register. If the mobile station registers (step 310), the time data is updated in step 311, and the process continues to step 306 to check if all data has been gone through. If the mobile station does not register within said given time (step 310), in step 312, the subscriber data of the mobile station is deleted from the visitor location register, and in step 313, an instruction is sent to the home location register to mark the mobile station as unreachable, whereupon the process moves to step 306 to check if all data has been gone through.

In a preferred embodiment of the invention, the condition is associated with the degree of fullness of the visitor location register, i.e. the total amount of subscriber data in the register, and a check can be made before step 306 to see if the visitor location register is sufficiently empty, and if so, the paging and deletion of inactive mobile stations can be stopped. In other words, in this embodiment, only a necessary amount of data is deleted by re-registrations consuming radio path capacity. When the condition is fulfilled the next time, this embodiment allows the emptying of the visitor register to be continued from that point where the process stopped the previous time.

The steps described above in Figures 2 and 3 are not in absolute chronological order, and some points can be executed simultaneously or deviating from the order presented. The conditions associated with comparing the inactivity time may also be different from what was described above. Other functions may also be executed between the steps, associated with connection establishment or failure thereof and/or maintaining subscriber data. Some steps may also be omitted, such as step 306 in Figure 3 in such an embodiment where the visitor location register goes through the subscriber data until there is sufficiently free memory in the visitor location register.

Figure 4 shows signalling according to the first preferred embodiment of the invention using a call as an example of message transfer. The assumption in Figure 4 is that the mobile station does not respond to the paging and the time limit set for the inactivity is exceeded. The messages between the mobile station MS, the exchange DXT, the visitor location register VLR and the home location register HLR are for example messages of the signalling system SS7 adapted to TETRA. If the VLR is integrated into the exchange DXT, intra-nodal data transmission is concerned. However, the invention is not restricted to these messages and this protocol, but other protocols and messages may also be used to transmit the same data. The data is most preferably transmitted by standard messages.

Referring to Figure 4, in step 4-1, the exchange DXT receives a call set-up request for a mobile station MS. In order to page the mobile station, the exchange DXT requests for subscriber data of the mobile station MS from the visitor location register VLR in a message 4-2. The visitor location register retrieves the subscriber data and sends it to the exchange DXT in a message 4-3. Having received the subscriber data, the exchange DXT pages the mobile station with messages 4-4. In step 4-5, the exchange notes that paging the mobile station MS failed, since the mobile station does not answer. The exchange DXT therefore retrieves (4-5) time data from the subscriber data, i.e. the point of time of the last contact with the mobile station, and uses it to calculate (step 4-5) the inactivity time Te1 and checks (step 4-5) if it exceeds the time limit time1. Since, in the example of Figure 4, the time limit time1 is exceeded (step 4-5), the exchange DXT sends to the visitor location register VLR an instruction in a message 4-6 to delete the subscriber data of the mobile station. Having received the message, the VLR deletes the subscriber data of the mobile station in step 4-7. The exchange DXT also sends to the home location register HLR in a message 4-8 an instruction to mark the mobile station as unreachable. Having received the message, the HLR marks the mobile station as unreachable in step 4-9. The exchange DXT also replies the call set-up request stating that the mobile station is unreachable (not shown in Figure 4).

The messages 4-6 and 4-8 are preferably the same messages as are used when a mobile station unregisters from the network.

The signalling messages described above in association with Figure 4 are only suggestive and may contain several separate messages for transmitting the same information. Other messages, associated for example with call set-up, may also be sent among the messages. Furthermore, the messages may contain other information. Depending on the operators and the system, other network elements, to which different functionalities are distributed, may also participate in data transmission and signalling.

Although in the above the operation of the first preferred embodiment of the invention was described by means of a call, it is obvious to a person skilled in the art how to apply the invention to a failure of delivering messages transmitted between signalling and to a failure of message transfer not perceived by the subscriber.

Although the above presents the invention assuming that the network comprises visitor and home location registers, it is obvious to a person skilled in the art how to apply the invention to a network only comprising a home location register. In this case, subscriber data is not deleted at all, but the subscriber is only marked as unreachable.

It is to be understood that the above description and the related figures are only intended to illustrate the present invention. Different variations and modifications of the invention are obvious to persons skilled in the art, without deviating from the scope of the invention disclosed in the attached claims.

## Claims

1. A method of deleting the subscriber data of an inactive mobile station from a mobile system database containing temporary subscriber data on the subscriber using the mobile station, the method comprising the following steps:
maintaining (205) in the system time data indicating the last contact with the mobile station over the radio path;
paging (203) the mobile station triggered by a factor unrelated to checking the activity of a mobile station of the mobile system;
**characterized by**, in case the mobile station does not answer the paging:
calculating (208) a first inactivity time, which is the time between the time data and the paging time;
checking (209) if the first inactivity time is equal to or longer than a predetermined time limit; and
if so, deleting (211) the subscriber data from the database.

2. A method as claimed in claim 1, **characterized by** the further steps of:
monitoring (301) the fulfilment of a predetermined condition in the system;
going through the subscriber data in the database in response to the fulfilment of the condition, the going through comprising the steps of:
a) retrieving (302, 307) the subscriber data;
b) calculating (304) a second inactivity time, which is the time between data retrieval and the time data;
c) checking (305) if the second inactivity time is equal to or longer than the predetermined time limit; and
d) if so, sending (308) a re-registration request to the mobile station; and
d1) in response to the mobile station's re-registration, updating (311) the time data to correspond to the re-registration time;
d2) in response to the mobile station not re-registering within a given time, deleting (312) the subscriber's subscriber data from the database.

3. A method as claimed in claim 2, **characterized by** the condition being associated with the total amount of subscriber data in the database.

4. A method as claimed in claim 2, **characterized by** the condition being associated with the time lapsed from the previous going through of the database.

5. A method as claimed in any of the previous claims,
**characterized by**
sending, in response to deleting the subscriber's subscriber data from the database, to a home location register of the subscriber an instruction to mark the mobile station as unreachable, and
marking, in response to receiving the instructions, the mobile station as unreachable in the home location register.

6. A cellular type of telecommunication network (SwMI) comprising at least one mobile station (MS),
at least one database (VLR1, VLR2) for temporarily maintaining subscriber data of mobile stations, and
the telecommunication network (SwMI) being arranged to maintain time data indicating the last contact with the mobile station (MS), and to page the mobile station (MS) triggered by a factor unrelated to checking the activity of a mobile station of the telecommunication network;
**characterized in that**
the telecommunication network (SwMI) is arranged to calculate a first inactivity time, which is the time between the time data and the paging time, in response to said failure to page said mobile station (MS); and to delete the subscriber data from the database (VLR1, VLR2) in response to the calculated first inactivity time being equal to or longer than a predetermined time limit.

7. A telecommunication network (SwMI) as claimed in claim 6, **characterized in that** the network (SwMI) is further arranged to retrieve subscriber data from the database (VLR1, VLR2) in response to the fulfilment of a predetermined condition; calculate a second inactivity time for the mobile station (MS), which is the time between data retrieval and the time data; check if the second inactivity time is equal to or longer than the predetermined time limit; and, if so, send a re-registration request to the mobile station (MS); update the time data in response to re-registration by the mobile station (MS); and in response to the mobile station (MS) not re-registering within a given time, delete the subscriber's subscriber data from the database (VLR1, VLR2).

8. A telecommunication network (SwMI) as claimed in claim 7, **characterized in that** the condition is associated with the total amount of subscriber data in the database (VLR1, VLR2).

9. A telecommunication network (SwMI) as claimed in claim 7, **characterized in that** the condition is associated with time.

10. A network node (DXT1, DXT2) in a telecommunication system, the node being arranged to communicate with a database temporarily containing subscriber data of mobile stations of the telecommunication system, the subscriber data including time data indicating the last contact with a mobile station, and the network node being arranged to page a mobile station triggered by a factor unrelated to checking the activity of a mobile station of the telecommunication system,
**characterized in that** the network node (DXT1, DXT2) is arranged to calculate a first inactivity time, which is the time between the time data and the paging time, in response to said failure to page the mobile station; and, in response to the calculated first inactivity time being equal to or longer than a predetermined time limit, to send to the database a command to delete the mobile station's subscriber data.

11. A network node (DXT1, DXT2) as claimed in claim 10, **characterized in that** the network node (DXT1, DXT2) is further arranged to retrieve subscriber data from the database in response to the fulfilment of a predetermined condition; calculate a second inactivity time for the mobile station, which is the time between data retrieval and the time data; check if the second inactivity time is equal to or longer than the predetermined time limit; and, if so, send a re-registration request to the mobile station; update the time data in response to a re-registration by the mobile station; and in response to the mobile station not re-registering within a given time, delete the subscriber's subscriber data from the database.

## Patentansprüche

1. Verfahren zum Löschen der Teilnehmerdaten einer inaktiven Mobilstation von einer Mobilsystemdatenbasis, die temporäre Teilnehmerdaten über den die Mobilstation verwendenden Teilnehmer enthält, wobei das Verfahren die folgenden Schritte umfasst:
Beibehalten (205) in dem System von Zeitdaten, die den letzten Kontakt mit der Mobilstation über die Funkstrecke angeben;
Anfunken (203) der Mobilstation ausgelöst durch einen Faktor, der nicht in Beziehung damit steht, die Aktivität einer Mobilstation des Mobilsystems zu überprüfen;
**gekennzeichnet durch**, wenn die Mobilstation das Anfunken nicht beantwortet:
Berechnen (208) einer ersten Inaktivitätszeit, die die Zeit zwischen den Zeitdaten und dem Anfunkzeitpunkt ist;
Prüfen (209), ob die erste Inaktivitätszeit gleich oder länger als eine vorbestimmte Zeitgrenze ist; und
Löschen (211) der Teilnehmerdaten von der Datenbasis, wenn dies der Fall ist.

2. Verfahren nach Anspruch 1, **gekennzeichnet durch** die weiteren Schritte:
Überwachen (301) der Erfüllung einer vorbestimmten Bedingung in dem System;
Durchsuchen der Teilnehmerdaten in der Datenbasis in Antwort auf die Erfüllung der Bedingung, wobei das Durchsuchen die Schritte umfasst:
a) Abrufen (302, 307) der Teilnehmerdaten;
b) Berechnen (304) einer zweiten Inaktivitätszeit, die die Zeit zwischen dem Datenabrufen und der Zeitdaten ist;
c) Prüfen (305), ob die zweite Inaktivitätszeit gleich oder länger als die vorbestimmte Zeitgrenze ist; und
d) Senden (308) einer Aufforderung zur erneuten Registrierung an die Mobilstation, wenn dies der Fall ist; und
d1) Aktualisieren (311) der Zeitdaten derart, dass sie dem Zeitpunkt der erneuten Registrierung entsprechen, in Antwort auf die erneute Registrierung der Mobilstation;
d2) Löschen (312) der Teilnehmerdaten des Teilnehmers von der Datenbasis in Antwort darauf, dass sich die Mobilstation innerhalb einer vorgegebenen Zeit nicht erneut registriert.

3. Verfahren nach Anspruch 2, **gekennzeichnet durch** die Bedingung, die der Gesamtmenge an Teilnehmerdaten in der Datenbasis zugeordnet ist.

4. Verfahren nach Anspruch 2, **gekennzeichnet durch** die Bedingung, die der Zeit zugeordnet ist, die seit dem vorherigen Durchsuchen der Datenbasis vergangen ist.

5. Verfahren nach einem der vorherigen Ansprüche, **gekennzeichnet durch**
Senden einer Anweisung an ein Home-Location-Register des Teilnehmers, um die Mobilstation als nicht erreichbar zu markieren, in Antwort auf das Löschen der Teilnehmerdaten des Teilnehmers von der Datenbasis, und
Markieren der Mobilstation in dem Home-Location-Register als nicht erreichbar in Antwort auf den Empfang der Anweisungen.

6. Zelluläres Telekommunikationsnetzwerk (SwMI) mit
wenigstens einer Mobilstation (MS),
wenigstens einer Datenbasis (VLR1, VLR2) zum temporären Beibehalten von Teilnehmerdaten von Mobilstationen, und
wobei das Telekommunikationsnetzwerk (SwMI) ausgelegt ist, Zeitdaten beizubehalten, die den letzten Kontakt mit der Mobilstation (MS) angeben, und die Mobilstation (MS) ausgelöst durch einen Faktor anzufunken, der nicht mit einer Überprüfung der Aktivität einer Mobilstation des Telekommunikationsnetzwerks in Beziehung steht;
**dadurch gekennzeichnet, dass**
das Telekommunikationsnetzwerk (SwMI) ausgelegt ist, eine erste Inaktivitätszeit zu berechnen, die die Zeit zwischen den Zeitdaten und der Anfunkzeit ist, in Antwort auf den Fehler, die Mobilstation (MS) anzufunken; und um die Teilnehmerdaten von der Datenbasis (VLR1, VLR2) in Antwort darauf zu löschen, dass die berechnete erste Inaktivitätszeit gleich oder länger als eine vorbestimmte Zeitgrenze ist.

7. Telekommunikationsnetzwerk (SwMI) nach Anspruch 6, **dadurch gekennzeichnet, dass** das Netzwerk (SwMI) ferner ausgelegt ist, Teilnehmerdaten von der Datenbasis (VLR1, VLR2) in Antwort auf die Erfüllung einer vorbestimmten Bedingung abzurufen; eine zweite Inaktivitätszeit für die Mobilstation (SM) zu berechnen, die die Zeit zwischen dem Datenabruf und den Zeitdaten ist; zu prüfen, ob die zweite Inaktivitätszeit gleich oder länger als die vorbestimmte Zeitgrenze ist; und, wenn dies der Fall ist, eine Aufforderung zur erneuten Registrierung zu der Mobilstation (MS) zu senden; die Zeitdaten in Antwort auf eine erneute Registrierung durch die Mobilstation (MS) zu aktualisieren; und die Teilnehmerdaten des Teilnehmers von der Datenbasis (VLR1, VLR2) in Antwort darauf zu löschen, dass sich die Mobilstation (MS) innerhalb einer vorgegebenen Zeit nicht erneut registriert.

8. Telekommunikationsnetzwerk (SwMI) nach Anspruch 7, **dadurch gekennzeichnet, dass** die Bedingung der Gesamtmenge an Teilnehmerdaten in der Datenbasis (VLR1, VLR2) zugeordnet ist.

9. Telekommunikationsnetzwerk (SwMI) nach Anspruch 7, **dadurch gekennzeichnet, dass** die Bedingung der Zeit zugeordnet ist.

10. Netzwerkknoten (DXT1, DXT2) in einem Telekommunikationssystem, wobei der Knoten ausgelegt ist, mit einer Datenbasis zu kommunizieren, die temporär Teilnehmerdaten von Mobilstationen des Telekommunikationssystems enthält, wobei die Teilnehmerdaten Zeitdaten aufweisen, die den letzten Kontakt mit einer Mobilstation angeben, und wobei der Netzwerkknoten ausgelegt ist, eine Mobilstation ausgelöst durch einen Faktor anzufunken, der mit einer Überprüfung der Aktivität einer Mobilstation des Telekommunikationssystems nicht in Beziehung steht,
**dadurch gekennzeichnet, dass** der Netzwerkknoten (DXT1, DXT2) ausgelegt ist, eine erste Inaktivitätszeit zu berechnen, die die Zeit zwischen den Zeitdaten und der Anfunkzeit ist, in Antwort auf das Mißlingen, die Mobilstation anzufunken; und in Antwort darauf, dass die berechnete erste Inaktivitätszeit gleich oder länger als eine vorbestimmte Zeitgrenze ist, einen Steuerbefehl zu der Datenbasis zu senden, um die Teilnehmerdaten der Mobilstation zu löschen.

11. Netzwerkknoten (DXT1, DXT2) nach Anspruch 10, **dadurch gekennzeichnet, dass** der Netzwerkknoten (DXT1, DXT2) ferner ausgelegt ist, Teilnehmerdaten von der Datenbasis in Antwort auf die Erfüllung einer vorbestimmten Bedingung abzurufen; eine zweite Inaktivitätszeit für die Mobilstation zu berechnen, die die Zeit zwischen dem Datenabruf und den Zeitdaten ist; zu prüfen, ob die zweite Inaktivitätszeit gleich oder länger als die vorbestimmte Zeitgrenze ist; und, wenn dies der Fall ist, eine Aufforderung zur erneuten Registierung an die Mobilstation zu senden; die Zeitdaten in Antwort auf eine erneute Registrierung durch die Mobilstation zu aktualisieren; und die Teilnehmerdaten des Teilnehmers von der Datenbasis in Antwort darauf zu löschen, dass sich die Mobilstation innerhalb einer vorgegebenen Zeit nicht erneut registriert.

## Revendications

1. Procédé de suppression des données d'abonné d'une station mobile inactive depuis une base de données d'un système mobile contenant des données temporaires d'abonné sur l'abonné utilisant la station mobile, ce procédé comprenant les étapes suivantes :
tenue à jour (205), dans le système, des données temporelles indiquant le dernier contact avec la station mobile sur la liaison radio ;
téléappel (203) de la station mobile déclenché par un facteur non lié à la vérification d'activité d'une station mobile du système mobile ;
**caractérisé**, dans le cas où la station mobile ne répond pas au téléappel, par :
le calcul (208) d'une première période d'inactivité, qui est la période entre les données temporelles et le temps du téléappel ;
la vérification (209) pour déterminer si la première période d'inactivité est égale ou supérieure à une limite de temps prédéterminée ; et
si oui, la suppression (211) des données d'abonné de la base de données.

2. Procédé selon la revendication 1, **caractérisé par** les étapes supplémentaires de :
contrôle (301) pour déterminer si une condition prédéterminée est satisfaite dans le système ;
consultation des données d'abonné dans la base de données si la condition est satisfaite, la consultation comprenant les étapes de :
a) extraction (302, 307) des données d'abonné ;
b) calcul (304) d'une seconde période d'inactivité, qui est la période entre l'extraction des données et les données temporelles ;
c) vérification (305) pour déterminer si la seconde période d'inactivité est égale ou supérieure à la limite de temps prédéterminée ; et
d) si oui, envoi (308) d'une demande de réabonnement à la station mobile ; et
d1) en réponse au réabonnement de la station mobile, mise à jour (311) de les données temporelles pour les faire correspondre à la période de réabonnement ;
d2) en réponse au non-réabonnement de la station mobile pendant une période donnée, suppression (312) des données d'abonné de l'abonné de la base de données.

3. Procédé selon la revendication 2, **caractérisé en ce que** la condition est associée à la quantité totale de données d'abonné dans la base de données.

4. Procédé selon la revendication 2, **caractérisé en ce que** la condition est associée au temps écoulé depuis la consultation précédente de la base de données.

5. Procédé selon l'une quelconque des revendications précédentes,
**caractérisé par**
l'envoi au registre des abonnés locaux, en réponse à la suppression des données d'abonné de l'abonné de la base de données, d'une instruction identifiant la station mobile comme inaccessible, et
identification, en réponse à la réception de cette instruction, de la station mobile comme inaccessible dans le registre des abonnés locaux.

6. Type cellulaire de réseau de télécommunication (SwMI) comprenant au moins une station mobile (MS),
au moins une base de données (VLR1, VLR2) destinée à tenir temporairement à jour les données d'abonnés des stations mobiles, et
le réseau de télécommunication (SwMI) étant configuré pour la tenue à jour de données temporelles indiquant le dernier contact avec la station mobile (MS), et pour un téléappel de la station mobile (MS) déclenché par un facteur non lié à la vérification d'activité d'une station mobile du réseau de télécommunication,
**caractérisé en ce que**
le réseau de télécommunication (SwMI) est configuré pour calculer une première période d'inactivité, qui est la période entre les données temporelles et le temps du téléappel, en réponse audit échec du téléappel de ladite station mobile (MS) ; et supprimer les données d'abonné de la base de données (VLR1, VLR2) si la première période d'inactivité calculée est égale ou supérieure à une limite de temps prédéterminée.

7. Réseau de télécommunication (SwMI) selon la revendication 6, **caractérisé en ce que** le réseau (SwMI) est également configuré pour extraire des données d'abonné de la base de données (VLR1, VLR2) si la condition prédéterminée est satisfaite ; calculer une seconde période d'inactivité de la station mobile (MS), qui est la période entre l'extraction des données et les données temporelles ; vérifier si la seconde période d'inactivité est égale ou supérieure à la limite de temps prédéterminée ; et, si oui, envoyer une demande de réabonnement à la station mobile (MS) ; mettre à jour les données temporelles en réponse au réabonnement de la station mobile (MS) ; et, en réponse au non-réabonnement de la station mobile (MS) pendant une période donnée, supprimer les données d'abonné de l'abonné de la base de données (VLR1, VLR2).

8. Réseau de télécommunication (SwMI) selon la revendication 7, **caractérisé en ce que** la condition est associée à la quantité totale de données d'abonné dans la base de données (VLR1, VLR2).

9. Réseau de télécommunication (SwMI) selon la revendication 7, **caractérisé en ce que** la condition est associée au temps.

10. Noeud de réseau (DXT1, DXT2) dans un système de télécommunication, ce noeud étant configuré pour communiquer avec une base de données contenant temporairement des données d'abonné de stations mobiles du système de télécommunication, les données d'abonné comprenant des données temporelles indiquant le dernier contact avec une station mobile, et le noeud de réseau étant configuré pour le téléappel d'une station mobile déclenché par un facteur non lié à la vérification d'activité d'une station mobile du système de télécommunication,
**caractérisé en ce que** le noeud de réseau (DXT1, DXT2) est configuré pour calculer une première période d'inactivité, qui est la période entre les données temporelles et le temps du téléappel, en réponse audit échec du téléappel de la station mobile ; et, si la première période d'inactivité calculée est égale ou supérieure à une limite de temps prédéterminée, pour envoyer à la base de données une commande de suppression des données d'abonné de la station mobile.

11. Noeud de réseau (DXT1, DXT2) selon la revendication 10, **caractérisé en ce que** le noeud de réseau (DXT1, DXT2) est également configuré pour extraire des données d'abonné de la base de données si une condition prédéterminée est satisfaite ; calculer une seconde période d'inactivité de la station mobile, qui est la période entre l'extraction des données et les données temporelles ; vérifier si la seconde période d'inactivité est égale ou supérieure à la limite de temps prédéterminée ; et, si oui, envoyer une demande de réabonnement à la station mobile ; mettre à jour les données temporelles en réponse au réabonnement de la station mobile ; et, en réponse au non-réabonnement de la station mobile pendant une période donnée, supprimer les données d'abonné de l'abonné de la base de données.
